(19)

Europäisches
Patentamt
European
Patent Office
Office européen
des brevets

(11)     **EP 2 086 665 B1**

(12)                    **EUROPEAN PATENT SPECIFICATION**

(45) Date of publication and mention
of the grant of the patent:
**11.12.2013   Bulletin 2013/50**

(51) Int Cl.:
*B01D 53/86* (2006.01)        *F23G 7/06* (2006.01)
*F23G 7/07* (2006.01)        *F23G 5/50* (2006.01)

(21) Application number: **07826407.4**

(22) Date of filing: **17.09.2007**

(86) International application number:
**PCT/IB2007/053745**

(87) International publication number:
**WO 2008/056281 (15.05.2008 Gazette 2008/20)**

(54) **PLANT AND PROCESS FOR THE TREATMENT OF GAS STREAMS**

ANLAGE UND VERFAHREN ZUR BEHANDLUNG VON GASSTRÖMEN

USINE ET PROCÉDÉ DE TRAITEMENT DE FLUX GAZEUX

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **06.11.2006   IT TO20060788**

(43) Date of publication of application:
**12.08.2009   Bulletin 2009/33**

(73) Proprietor: **Fridra Invest S.r.L.**
**04100 Latina (IT)**

(72) Inventors:
• **CAVAGLIA', Giuliano**
**10020 Pessione Fraz. Di Chieri (to) (IT)**

• **RICCI, Alberto**
**40100 Sezze Scalo (It) (IT)**

(74) Representative: **Lisa, Elisabetta et al**
**Praxi Intellectual Property S.p.A.**
**C.so Vittorio Emanuele 3**
**10125 Torino (IT)**

(56) References cited:
**EP-A- 1 136 755      WO-A-95/02450**
**US-A- 5 366 708      US-A- 5 873 388**
**US-A- 5 874 053**

**Description**

The present invention refers to a plant, and to the relevant process, for the treatment of gas streams.

In particular, the present invention refers to a plant, and to the relevant process, for the treatment of gas streams, said plant comprising a catalytic reactor with periodical flow reversal.

More in detail, the plant, and the relevant process, according to the present invention are intended for the treatment of gas streams consisting of emissions comprising contaminants of volatile organic nature or Volatile Organic Compounds (VOC).

Many industrial operations, such as fine chemicals and pharmaceuticals manufacturing, food manufacturing, spread-coating, printing, painting and decorating, final polishing operations of manufactured articles, of laundry, and so on, frequently employ solvents (for instance, alcohols and esters).

Usually, all the manufacturing cycles involving the use of solvents and hydrocarbons require the treatment of gas emissions containing residues of the same solvents and/or hydrocarbons used, due to the high volatility of the latters.

Said gas emissions containing solvents and hydrocarbons (the so-called "VOC": Volatile Organic Compounds) can not be releases as such into the atmosphere, but they have to be first subjected to a content reduction below the values provided for by the existing laws, i.e. TOC < 50 mg/m$^3$ ("TOC": Total Organic Carbon).

The systems conventionally employed until now for reducing and recovering the VOC are activated carbon adsorption, cryo-condensation, absorption/stripping and thermal-incineration.

Main drawbacks of the aforesaid processes consist in high investment costs (in case of adsorption and thermal incineration); plant and operating difficulties, high maintenance costs and generation of a VOC contaminated "scrubbing" liquid effluent (in case of adsorption and absorption/stripping); extremely high operating costs (in the case of cryo-condensation); high costs of thermal power for heating the whole emission up to the combustion temperature (in the case of thermal incineration).

In order to overcome the aforesaid drawbacks, plants, and the relevant processes, for the treatment of gas streams by means of catalytic reactors with periodical flow reversal have been developed; such plants, and the relevant processes, are known, for instance, from the US Patents No. 5,366,708 granted on November 22, 1994 and No. 5,823,770 granted on October 20, 1998, both in the name of Monsanto.

US Patent No. 5,366,708 discloses, indeed, a plant, and the relevant process, for the treatment of a VOC containing gas stream in order to minimise the amount of non-reacted gas; said plant comprises a catalytic reactor with periodical flow reversal having two catalytic stages of reaction and steady heat transfer, said stages being separated by a central region in which an additional inlet for the gas stream is provided.

Other examples of similar prior art solutions are disclosed in the United States Patent no. US 5,873,388, in the European Patent application no. EP 1 136 755 A1 and in the United States Patent no. US 5,874,053.

US Patent No. 5,873,388 discloses an apparatus, and the corresponding method, for stabilising the pressure fluctuations occurring in fluid flow systems, said apparatus being equipped with valves or other flow control means that are periodically actuated to switch the direction or path of the fluid flow; in a particular aspect of this invention, the fluid flow system comprises a catalytic oxidation system wherein the flow of VOC-containing gas is cyclically reversed by switching of the flow control means in the fluid flow circuit and wherein it is possible to operate in steady-state auto-thermal mode to maintain the bed of oxidation catalyst at its necessary elevated operating temperature.

The European Patent application no. EP 1 136 755 A1 discloses an abatement system for industrial process gases, said system being able to oxidise particulates, VOCs and CO in a heat regenerative bed containing a plurality of axially parallel, discrete and longitudinally disposed heat exchange channels and operating in steady state; in accordance with this invention, continuous rotation of the rotor facilitates steady state treatment of the process gases.

US Patent No. 5,874,053 discloses a system that employs a horizontal regenerative catalytic oxidiser to perform the abatement of contaminant industrial process emissions by recovering and transferring heat remaining in the cleansed exhaust gas to emissions entering the oxidiser, thereby minimising the amount of supplemental energy required to raise the emission to its ignition temperature; characteristically, flow control valves are used to direct the emissions to one or more regenerators for preheating prior to thermal or catalytic oxidation.

The main drawback of the plant, and of the relevant process, according to the above-mentioned document consists mainly in that the steady state catalytic combustion does not allow to satisfactorily treat gas streams in which the VOC content is very low or time-variable.

Also US Patent No. 5,823,770 discloses a plant, and the relevant process, for the treatment of a VOC containing gas stream; said plant comprises a catalytic reactor with periodical flow reversal and heat recovery having a gas-permeable bed of a material, suitable for efficient heat transfer, in which the oxidation reaction of the contaminant substances takes place.

According to the teaching of the aforesaid Patent, the bed is indirectly heated thanks to a gas heated in an external heater, preferably thanks to a hot gas produced inside a burner by combustion of an hydrocarbon fuel; the heat stored inside the bed is transferred to the gas stream to be treated when feeding it into the reactor, to heat it up to the required temperature for the aforesaid oxidation.

The main drawback of the plant, and of the relevant process, according to the above-mentioned document consists mainly in that the catalytic combustion needs a heat contribution from outside, this requiring high operating costs of the plant.

A plant, and the relevant process, have been now found, said plant, and the relevant process allowing the catalytic combustion under forced non-steady state and, as such, self-heating, also in the presence of gas emissions having a very diluted and/or variable VOC content.

Advantageously, then, the plant, and the relevant process, according to the invention, allow to overcome the limitations of the known prior art.

Furthermore, advantageously, the plant, and the relevant process, according to the invention, allow the reduction of the VOC concentration to values lower than those provided for by law (after treatment, a TOC $\leq$ 20 mg/m$^3$ is achieved, whatever the VOC content may be at the inlet).

The invention will be now illustrated with reference to the attached drawings given by way of example, in which:

- FIG. 1 is a schematic representation of the plant, comprising a catalytic reactor with periodical flow reversal, according to the invention;
- FIG. 2 is the operating scheme of the reactor of FIG. 1;
- FIG. 3 is a block diagram of the driving and controlling system of the plant of FIG. 1;
- FIG. 4 is the scheme of the controlling system of the reactor of FIG. 1;
- FIG. 5A is a graph representing the trend of the pressure drops vs. reactor size and gas space velocity in the pilot plant of Example 1 according to the present invention;
- FIG. 5B is a graph representing the trend of the conversion vs. reactor temperature with catalyst EnviCat VOC - 1544 having a GHSV (Gas Hourly Space Velocity) of 12,500 h$^{-1}$ in the pilot plant of Example 1 according to the present invention;
- FIG. 5C is a graph representing the temperature profiles inside the reactor vs. axial coordinate and reversal time in the pilot plant of Example 1 according to the present invention.

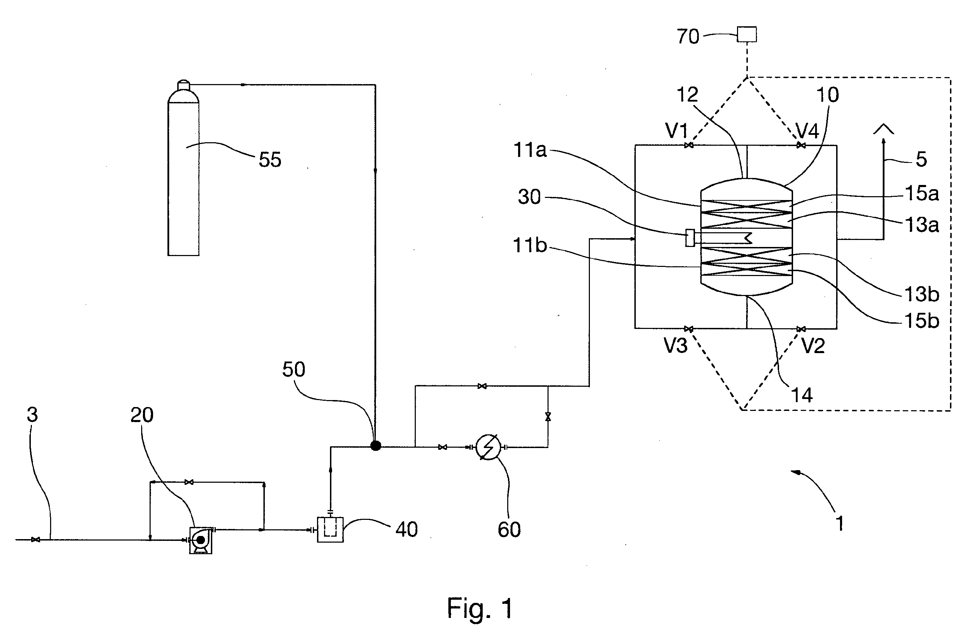

With reference to FIG. 1, the plant 1 for the treatment of gas streams according to the present invention is schematically shown, said plant 1 comprising at least a catalytic reactor with periodical flow reversal 10, preferably cylindrical with vertical axis, having at least two stages 11a, 11b, preferably arranged in series, each stage 11a, 11b consisting of a catalytic bed 13a, 13b, preferably associated to a corresponding layer of inert material 15a, 15b, said bed and layers being arranged according the following sequence of superimposed layers: inert - catalyst - empty space - catalyst - inert.

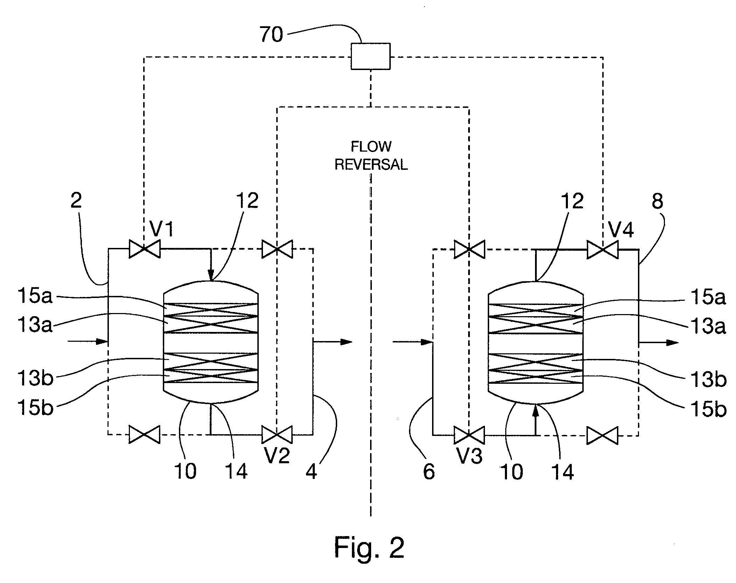

In accordance with the general definition available in literature (see, for instance, Yu. Sh. Matros, "Unsteady State Processes in Catalysis", Brill Academic Publishers, December 1990; Eigenberger, G., 1992, Fixed bed reactors, in Ullmann's Encyclopedia of Chemical Industry, VCH, Weinheim, pages 199-238), and with reference to FIG. 2, a catalytic reactor with periodical flow reversal 10 is a reactor in which the flow direction is periodically reversed and having two end portions, an upper end portion 12 and a lower end portion 14, that can alternately act as inlet or as outlet; furthermore such reactor is equipped with a first feeding line 2 to the reactor 10, onto which a first valve V1 is located, and with a corresponding first discharge line 4 from the reactor 10, onto which a second valve V2 is located, for circulating the gas stream to be treated according to a first treatment direction, and with a second feeding line 6 to the reactor 10, onto which a third valve V3 is located, and with a corresponding second discharge line 8 from the reactor 10, onto which a fourth valve V4 is located, for circulating the gas stream to be treated according to a second treatment direction reversed with respect to said first treatment direction.

The flow reversal between said first and second treatment directions is performed by means of the valves V1, V2, V3 and V4; in particular, before the reversal occurring, valves V1 and V2 being open and valves V3 and V4 being closed, the gas stream to be treated flows into the reactor through the upper end portion 12, acting as inlet, and is discharged from the reactor 10 through the lower end portion 14, acting as outlet, while, after the reversal occurred, valves V 1 and V2 being closed and valves V3 and V4 being open, the gas stream to be treated flows into the reactor through the lower end portion 14, acting as inlet, and is discharged from the reactor 10 through the upper end portion 12, acting as outlet.

As previously stated, the plant 1 according to the present invention allows to perform the catalytic combustion under forced non-steady state of the gas stream to be treated and, as such, it is auto-thermal, i.e. it is suitable for being self-supporting, avoiding "shut-down" threats.

In order to operate constantly and steadily under auto-thermal behaviour region, it is necessary to ensure that the catalyst operates under certain specific conditions; plant 1 is therefore equipped with a critical parameters monitoring/ detecting system, such as, for instance, temperatures (in particular, catalytic beds temperature), concentrations (in particular, VOC concentration in polluted gas to be treated), and so on.

When a critical parameter becoming inconsistent with the operating optimal conditions of the catalyst is detected, the plant is able to automatically go back to said optimal conditions, and therefore to avoid "shut-down" risks, by acting upon three different variables: 1) heat contribution, 2) increase of the amount of the combustion supporter in the gas stream to be treated and 3) variation of the reversal time.

Again referring to FIG. 1, plant 1 according to the present invention further comprises a first device, or heater, 30 able to heat-up the reactor 10, said first device 30 preferably being interposed in the empty space between said at least two stages 11 a, 11b, to give heat to the gas stream to be brought to reaction temperature and consequently supporting the catalytic oxidation reaction of the contaminants contained thereto.

Said first device 30 is activated when a heat supplement is needed, which occurs, for instance, when gas emissions to be treated have a low $\Delta t_{adiabatic}$ (typically, $\Delta t_{adiabatic} < 15$ °C), or when the VOC content may vary along operation time, or even when the contaminants to be removed are present in very low concentrations, non sufficient for the self-supporting of the reactor 10.

Plant 1 according to the present invention further comprises a second device, or mixer, 50 able to mix the gas stream to be treated fed to the reactor 10 with oxygen or with another combustion supporter, so that to allow the increase of the amount of combustion supporter contained in such gas stream to be treated; such oxygen or another combustion supporter may be fed, for instance, through container 55.

Similarly to what previously told as to said first device 30, said second device 50 is activated, in addition or as an alternative to said first device 30, in order to assure the self-supporting of the reactor 10; in particular, the addition of combustion supporter to the gas stream to be treated takes place when the VOC contaminants to be removed are present in a gas stream lacking in oxygen or oxygen-free.

Plant 1 according to the present invention further comprises a third device, or time electronic controller, 70 able to modify the reversal time of the reactor 10 between said first treatment direction and said second treatment direction, which is opposite with respect to said first treatment direction; the reversal times between said first and second treatment directions are comprised in the range of about 20 - 1,500 seconds and, preferably, are comprised in the range of about 60 - 600 seconds.

Similarly to what previously told as to said first device 30 and second device 50, said third device 70 is activated, in addition or as an alternative to said first device 30 and second device 50, in order to ensure the self-supporting of the reactor 10; in particular, when the reactor 10 tends to go to "shut-down", the progressing decrease of the reversal time is actuated.

Plant 1 according to the present invention finally comprises means 90 for driving and controlling said first device 30 and said second device 50 and said third device 70, depending on the catalyst operating conditions, for instance on the temperature of the catalytic beds 13a, 13b, said means 90 thus allowing the performance of a forced non-steady state catalytic combustion of the gas stream to be treated.

As previously told, said first device 30 is a heater, said second device 50 is a mixer and said third device 70 is a time electronic controller.

Plant 1 according to the present invention further comprises a feeding line 3, for feeding the gas stream to be treated to the reactor 10, and a discharge line 5, for discharging the treated gas stream from the reactor 10.

Plant 1 according to the present invention further preferably comprises a blower 20 for compressing and feeding the gas stream to be treated to the reactor 10.

Said blower 20 is preferably a centrifugal blower designed so as to be able to discharge the gas stream with the necessary pressure head for allowing it to pass through the whole plant 1 and for it to maintain, at the outlet from said plant 1, a pressure sufficient for its release.

Plant 1 according to the present invention further preferably comprises a filter 40, located downstream said blower 20, for filtering the gas stream to be treated fed to the reactor 10. Said filter 40 is preferably a filter with cartridges made of sintered metal fibres, which is able to operate up to 250 °C and having an absolute filtration degree of 10 μm, for removing possible powders that could jeopardise the activity of the oxidation catalyst. Plant 1 according to the present invention further preferably comprises a pre-heater 60, located downstream said blower 20 and said filter 40, for pre-heating the gas stream to be treated fed to said reactor 10.

Said pre-heater 60, which is preferably electric, is exclusively used upon the start-up step of plant 1 and it is intended for transferring heat to the stream of the start-up ambient air which afterwards, in its turn, will transfer it to the reactor 10 and, in particular, to the catalytic beds 13a, 13b and to the layers of inert material 15a, 15b therein contained.

The temperature up to which the catalytic beds have to be brought, so that they are effective for the VOC combustion reactions, depends on the kind of material used as catalyst but, in general, it must be higher than 400 °C; in particular, the inventors experimentally proved that, according to the present invention wherein the reactor is initially brought and is then maintained at substantially high temperatures, it is possible to avoid the use of catalysts based on noble metals such as Pt and Pd, which are more expensive and which, on the contrary, should be used in case of operating at low temperatures, at which the catalyst based on metal oxides, preferably of Cu and Mn, do not show a sufficient efficiency.

Plant 1 according to the present invention is suitable for the treatment of gas streams consisting of emissions comprising contaminants of volatile organic nature, at a low concentration, and also consisting of recirculation process gas streams being part of process plants, wherein the VOC content has to be reduced before recirculating.

More particularly, plant 1 is suitable for the treatment of the following VOC, which are indicated by way of non exhaustive example:

**Alcohols**

| | |
|---|---|
| Methanol | $CH_4O$ |
| Ethanol | $C_2H_6O$ |
| Propanol (both the isomers) | $C_3H_8O$ |
| Butanol (all the isomers) | $C_4H_{10}O$ |
| Pentanol (all the isomers) | $C_5H_{12}O$ |
| Cycloexanol | $C_6H_{12}O$ |
| Benzyl alcohol | $C_7H_8O$ |

**Ketones**

| | |
|---|---|
| Acetone | $C_3H_6O$ |
| Butanone (MEK) | $C_4H_8O$ |
| Methyl isobutyl ketone (MIBK) | $C_6H_{12}O$ |

**Aromatics**

| | |
|---|---|
| Benzene | $C_6H_6$ |
| Toluene | $C_7H_8$ |
| Ethyl benzene | $C_8H_{10}$ |
| Styrene | $C_8H_8$ |
| Xylene | $C_8H_{10}$ |

**Esters**

| | |
|---|---|
| Methyl Acetate (MeAc) | $C_3H_6O_2$ |
| Ethyl Acetate (EtAc) | $C_4H_8O_2$ |
| Butyl Acetate (BuAc) | $C_6H_{12}O_2$ |

**Ethers**

| | |
|---|---|
| Methyl tert-butyl ether (MTBE) | $C_5H_{12}O$ |
| Ethyl tert-butyl ether (ETBE) | $C_6H_{14}O$ |
| Di - isopropyl ether (DIPE) | $C_6H_{14}O$ |
| Tetrahydro furan (THF) | $C_4H_8O$ |
| Dioxane | $C_4H_8O_2$ |
| Dioxolane | |

**Aliphatics** — **From $C_3$ to $C_{18}$**

| | |
|---|---|
| Chlorinated hydrocarbons | |
| Dichloro methane | $CH_2Cl_2$ |
| Chloroform | $CHCl_3$ |
| Trichloro ethane | $C_2H_3Cl_3$ |
| Perchloroethylene | $C_2Cl_4$ |

Preferably, the catalyst forming each catalytic bed 13a, 13b is a catalyst specific for VOC oxidation and, preferably, it as based on oxides of Cu and Mn, while each layer of inert material 15a, 15b is made of $Al_2O_3$.

As regards the process for the treatment of gas streams employing the plant 1 disclosed above, it comprises the steps of:

- feeding a gas stream to be treated into a catalytic reactor with periodical flow reversal 10 of the kind previously disclosed in detail, said feeding occurring through a feeding line 3;

- performing a flow reversal into the reactor 10 between a first treatment direction and a second treatment direction, opposite with respect to said first treatment direction;

- controlling said reactor 10 to perform a forced non-steady state catalytic combustion of the gas stream to be treated, said control, depending on the catalyst operating conditions, for instance on the temperature of the catalytic beds 13a, 13b, being carried out by actuating means for driving and controlling 90 that operate a first device, or heater, 30 able to supply heat to the reactor 10, and a second device, or mixer, 50 able to mix the gas stream to be treated fed to the reactor 10 with oxygen or with another combustion supporter, so that to allow the increase of the amount of combustion supporter contained in such gas stream to be treated, and a third device, or time electronic controller, 70 able to modify the reversal time of the reactor 10 between said first treatment direction and said second treatment direction reversed with respect to said first treatment direction; and

- discharging the treated gas stream through a discharge line 5.

Said first device 30 is preferably interposed between said at least two stages 11a, 11b of the reactor 10, to supply heat to the reactor 10 and, consequently, to support the catalytic oxidation reaction of the VOC contaminants contained in the gas stream to be treated.

The process according to the invention may further preferably comprise a step wherein, through a blower 20, the compression of the gas stream to be treated and its feeding to the reactor 10 is carried out.

The process according to the invention may further preferably comprise a step wherein, through a filter 40 located downstream said blower 20, the filtration of the gas stream to be treated fed to the reactor 10 is carried out.

The process according to the invention may further preferably comprise a step wherein, through a pre-heater 60 located downstream said blower 20 and said filter 40, the pre-heating of the gas stream to be treated fed to the reactor 10 is carried out.

Briefly, the gas stream to be treated, which contains contaminants of volatile organic nature, preferably at a low concentration, or even a process recirculation gas streams being part of process plants, wherein the VOC content has to be reduced before recirculating, is fed through the feeding line 3, after having been in case compressed by the blower 20, after having been in case purified from the presence of powders and aerosols in the filter 40 and after having been in case heated in the pre-heater 60, to the reactor 10, where the contaminants are removed and the developed combustion heat is used for heating the incoming gas stream.

The reactor 10 must be initially, that is upon start-up, heated up to the ignition point, and thereafter, thanks to exothermy of the oxidation reaction of the VOC contaminants, a mobile thermal profile, also named "thermal wave", is generated inside each stage 11a, 11b.

As previously said, in order to perform a forced non-steady state catalytic combustion of the gas stream to be treated, it is necessary that plant 1 is properly controlled; therefore, the configuration of the driving and controlling system 90 of said plant 1 is hereinafter disclosed in detail.

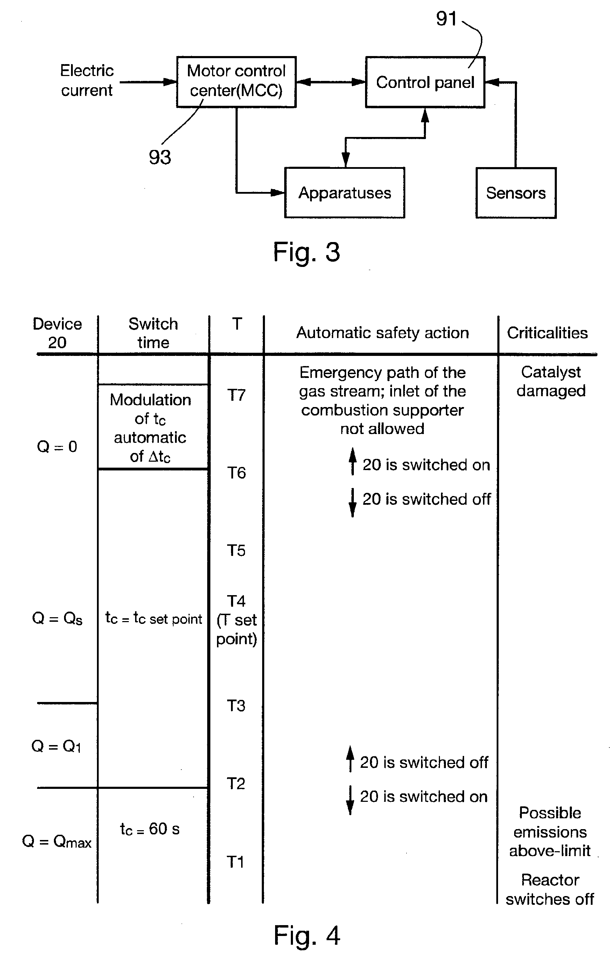

As known by the person skilled in the art, said driving and controlling system 90 will consist of the following main components: a control panel 91 and a motor control center 93, for instance for the blower 20, for the actuators of the power-assisted valves V1, V2, V3 and V4, and so on; each of said components exchanges data and signals with the others according to the block diagram illustrated in FIG. 3.

In particular, FIG. 3 concisely indicates the block denoting the control panel 91, the block denoting the motor control center 93, the block denoting the apparatuses that form plant 1, that is the reactor 10, the heater 30 and the mixer 50 and the time electronic controller 70 and, optionally, the blower 20, the filter 40 and the pre-heater 60, and the block denoting sensors placed in correspondence to each of said apparatuses in order to detect the different process parameters, temperature, pressure, and so on.

The control panel 91 is the main component of the system 90 and it is intended to supervise the combustion plant 1; such supervision, typical of any control panel known to the person skilled in the art, consists in collecting all the different kinds of signals coming from the field sensors and transmitters, such as detectors of temperatures, pressures and other process parameters, and in displaying the relevant data on a dedicated monitor through graphic pages representing the plant flow diagram; in interfacing the various signals coming from field, that is coming form the different apparatuses that form plant 1 onto which said sensors, transmitters, and so on, are placed, with the MCC ("Motor Control Center") and with the other control panels, if it would necessary to connect the driving and controlling system 90 of plant 1 with the control panel/s of possible existing process units from which the gas stream to be treated is produced; in managing the interlock logics, whereby upon opening of a valve, for instance V1, another valve, for instance V3, is correspondingly closed, and vice versa, relevant to the feeding of the catalytic reactor with periodical flow reversal 10, as well as, for instance, to the high temperature protective devices of the reactor 10 itself and of the other apparatuses; in storing information (trends of the various measurements, openings and closings of the valves, situations of run or stop of motors and electric users, status of the alarms, and so on) for continuous time periods, for instance higher than 2,000 hours of continuous operation of plant 1, so as to have available all the data necessary for making analysis and process calibrations, "troubleshooting" and maintenance activities; in displaying, visually and acoustically, and in managing the different alarm signals, for instance too high or too low temperature, too high or too low pressure, and so on, located on the apparatuses that form plant 1; in automatically generating weekly-frequency operational reports.

The motor control center 93 supplies all the electric users of the apparatuses that form plant 1; it is equipped with extractable boxes to facilitate and make sure the maintenance and replacement operations.

For the driving and controlling operations, plant 1 can be conceptually divided into the following two sections:

- pumping section, if provided, and
- reaction section.

In the pumping section of plant 1, if provided, the gas stream to be purified is taken from the emission point and optionally fed, through the feeding line 3, to the blower 20 if provided, by means of which it is pumped towards the following section; directly downstream the pumping, the filtration with the filter 40 if provided is optionally carried out, for removing possible powders that could jeopardise the activity of the oxidation catalyst.

The pumping section, if provided, is controlled so as to make the blower 20 always work at the design conditions thanks to the provision of a recirculation flowrate, by means of a by-pass, said flowrate being maintained through flowrate measurements in the main feeding line 3; downstream the blower 20 an automatic lock system can be placed in, which intervenes after a pressure increase in the line and acts upon the blower 20 itself, by opening the supply electric circuit thereof.

In the reaction section of plant 1, the gas stream to be purified, coming from the preceding pumping section if provided, is introduced in the catalytic reactor with periodical flow reversal 10, after having been in case added with oxygen or with another combustion supporter, fed, for instance, through container 55, in the mixer 50 for combustion, in particular in applications wherein the VOC to be removed are contained in an inert gas stream, that is lacking in oxygen or oxygen-free.

The flow reversal occurs periodically by means of an electronic device, or time electronic controller, 70 acting upon the power-assisted ON/OFF valves V1, V2, V3 and V4, which connect both the end portions 12 and 14 of the reactor 10 acting alternatively as inlet or outlet of the gas stream, both with the feeding line 3 of the gas stream to be treated, and with the discharging one 5 of the treated gas stream.

According to the invention, as previously stated, in order to temporarily balance possible VOC concentration decreases in the gas stream to be treated, thus avoiding the progressing "shut-down" of the system, a device, or heater, 30 able to give heat to the reactor 10 can be provided; preferably, such device 30 consists of a resistor electric heater placed between the at least two stages 11a, 11b that contain the catalyst.

It is further optionally provided a pre-heater 60, which is preferably electric, located upstream the reactor 10 and that is only used upon the start-up transient step of the plant; when the reactor 10 has reached a temperature sufficient for the reaction of catalytic combustion, the start-up transitional period will be deemed to be completed, the pre-heater 60 is shut down and the reactor 10 starts working under "periodical flow reversal" regimen, by alternating at regular time intervals the inlet and the outlet of the gas stream. As previously told, when the VOC to be oxidised are present in an inert gas stream, that is lacking in oxygen or oxygen-free, the supply of oxygen or of another combustion supporter, which is mixed with the gas stream to be treated in the mixer 50, has to be provided; said supply of oxygen or of another combustion supporter may take place, for instance, through container 55.

The plant provides the adjustment of the combustion supporter stream flowrate through a flow control valve (not shown) depending on two cascade control sequences, the first of which operates for maintaining the combustion supporter flowrate at the "set-point" value, while the second one changes the flowrate "set-point" value depending on the deviation between the combustion supporter concentration at the reactor outlet and the desired one; in case of emergency shut-down of the system, said flow control valve is automatically closed, thus stopping the combustion supporter flow.

As previously told, the reactor 10 is designed in a symmetric way, so as to allow the periodic reversal of the flow direction of the gas stream to be treated between inlet and outlet. The flow direction management system of the reactor 10, which is realised by means of opening / closing of the automatic and power-assisted ON/OFF valves V1, V2, V3 and V4, operates on the basis of the time interval set between a reversal and the following one, also denoted as "switch time", $t_c$.

The main parameter to be controlled is the temperature inside the reactor 10, and more precisely inside the catalytic beds 13a, 13b, because if it is too high, it may damage the catalyst (and, to this purpose, several automatic protective system for high temperature, which act, for instance, by stopping the heat supplied by the heater 30 or by intercepting the feeding line of oxygen or of another combustion supporter to stop the mixing with the gas stream to be treated, are provided inside the reactor 10), but if it is too low, it may bring to shut-down of the reactor 10.

In order to maintain a temperature profile in the catalyst within the operating range of the same, it is necessary to optimise the switch time parameter; if the gas stream to be treated has a variable VOC content, it is possible to adjust the temperature of said gas stream and, consequently, of the catalyst by intervening with the heating device 30, by changing the supplied heat depending on the temperature measured inside the catalyst bed/s.

During operation of the reactor 10, it is necessary to assure that the required outlet VOC concentration is matched, that is it is necessary to ensure that the reactor operates by converting all the fed VOC into $H_2O$ and $CO_2$.

The reactor 10, exactly on the basis of the operating principle of periodical flow reversal, is able to operate substantially under total conversion or under zero conversion, and it passes from one condition to the other in a very short time; it is therefore necessary that the driving and controlling system 90 maintain said reactor 10 under total conversion conditions, that is with a thermal level higher to a temperature that is typical of the catalyst employed (for instance, higher than 400 °C), as well as of the fed VOC type.

If, for instance, the temperature of the reactor 10, or rather of the catalytic beds 13a, 13b, decreases under a certain value, the driving and controlling system 90 has to operate by increasing the heat supplied by the device 30; if the temperature further decreases, it is necessary to operate by reducing the switch time, by actuating the time electronic controller 70, by bringing it to the minimum value compatible with the required service life of the valves.

The scheme of FIG. 4 shows the different operations run on the reactor 10 depending on the catalyst temperature, as well as on the criticalities that may occur.

From said scheme one can observe the presence of control variables, which have to be settled by the operator in order to optimise the process; among these variables there are seven temperatures (T1, T2, T3, T4, T5, T6, T7), a heat flow (Q1) referred to the device 30 and a switch time ($\Delta t_c$) referred to the time electronic controller 70.

Under optimal operating conditions, the catalytic beds 13a, 13b of the reactor 10 run at T4, the set-point temperature; variations comprised between T3 and T5 are regarded as normal catalyst temperature fluctuations, which do not then require any kind of action and, therefore, in this field of temperatures the switch time and the heat supplied by the device 30 are the set-point ones.

In case the catalyst temperature exceeds T5, the heat supply given by the device 30 is stopped; if this action results insufficient for blocking the temperature increase, when the value T6 is reached an alarm for the operator and an interlock are activated, said interlock acting upon the switch time adjustment device that, depending of the catalyst temperature, modulates $t_c$ through $\Delta t_c$ variations.

In the event that even this action stops the temperature increase, upon reaching the value T7 a further alarm for the operator is activated, to which the reactor emergency shut-down follows through an interlock that modify the control on the valves regulating the gas stream flow in the reactor 10 (the feeding valves are closed and the discharge valves are opened) and the feeding is diverted to the middle portion of the reactor 10; in this way, the temperature peak in the reactor is shifted from the catalyst to the inert material, consequently causing the gradual shut-down of the reactor itself.

In other words, when the situation of emergency for very high temperature occurs, the plant is made to go to shut-down because the flow is no more reversed and a cold gas stream is fed, preferably in the middle region between the stages 11a, 11b; as a consequence, the average temperature of the catalytic beds 13a, 13b is forced to drastically decrease in a short time due to the removal of the enthalpy content of the catalytic beds themselves by means of the heat exchange of the cold gas stream that passes through them.

In case the catalyst temperature goes down T3, a heat supply through the device 30 is provided until the value Q1 is reached.

In case the catalyst temperature, after this action, goes some more down to below the value T2, an alarm for the operator is activated and automatically the device 30 supplies the maximum heat flow; furthermore, through an interlock, the switch time is modified, by bringing it to the minimum allowed, for instance of 60 s.

In case that even this action is insufficient to recover the optimal temperatures inside the reactor 10, or rather inside the catalytic beds 13a, 13b, and the temperature further decreases, an ultimate alarm of very low temperature is provided, which warns the operator that the reactor is shutting down.

In both the examined cases, said interlock acts in a reversible way, by recovering the set-point switch time in the event that T6 and T2 are exceeded in a direction opposite to that above-mentioned.

As aforesaid, the adjustment temperatures depend on the kind of the catalyst employed; an example of temperatures is reported in the below table:

| T1 | T2 | T3 | T4 | T5 | T6 | T7 |
|---|---|---|---|---|---|---|
| 360 °C | 380 °C | 400 °C | 430 °C | 460 °C | 470 °C | 500 °C |

After having disclosed in detail the control operations of plant 1 under regimen conditions, mention will be made to the start-up phase of the same and, in particular, of the reactor 10. The start-up takes place in an semiautomatic way and must be carried out without VOC, which would not react at low temperatures and could even dirty the catalyst, thus reducing its effectiveness.

In order to start-up the reactor 10, it is sufficient that at least a half of said reactor 10 (catalyst + inert material) had exceeded, for instance, the temperature of 400 °C.

The heated gas stream, to be made to flow into the reactor during the start-up phase, must have, for instance, a temperature 50 °C lower than the maximum exercise temperature of the catalyst.

During the start-up transient step, the gas stream is made to pass through the pre-heater 60, before introducing it into the reactor 10; when the final temperature of the first of the two catalyst beds 13a, 13b reaches the pre-set value (for instance, 400 °C), an automatic lock system switches off the pre-heater 60, thus starting the normal operation mode.

By using a demonstration mobile plant unit, experimental tests, which are hereinafter reported for illustrative purposes of the present invention, are carried out; said demonstration unit has a nominal capacity of 5,000 $Nm^3$/h, with a ratio maximum to minimum power ("turn-down ratio") from 60% to 140% of the nameplate capacity, that is from 3,000 $Nm^3$/h to 7,000 $Nm^3$/h, a flexibility ranging from 0 to 500 mg/$Nm^3$ of VOC and an expected yearly operation of 8,500 h/year.

For experimental purposes, a representative case has been defined, which has been identified as Example 1, said case being representative from the point of view of the properties of the gas stream to be treated; the data reported below refer to such Example 1.

Example 1

| **Feeding properties:** | |
|---|---|
| Feeding | Air + VOC |
| Temperature | 25 °C |
| Pressure | 1 bar a |
| Density | 1.168 kg/$m^3$ |
| Argon | 1.29 % (m/m) |
| Carbon dioxide | 0.05% (m/m) |
| Acetone | 0.029 % (m/m) |
| Isopropyl alcohol | 1.01 % (m/m) |
| **Product properties:** | |
| Outlet stream | Air + VOC (< 50 mg/$Nm^3$) |
| Temperature | 43 °C |
| Pressure | 1.005 bar a |
| Density | 1.107 kg/$m^3$ |
| Argon | 1.29 % (m/m) |
| Carbon dioxide | 0.14 % (m/m) |
| Acetone | 0.0000 % (m/m) |
| Isopropyl alcohol | 0.0000 % (m/m) |
| Water | 0.04 % (m/m) |

The demonstration unit "hearth" is the catalytic reactor with periodical flow reversal, which consists of two stages in series, each formed of a layer of inert material, acting as a thermal flywheel, and of a layer of catalyst, arranged in a perfectly symmetrical way with respect to the middle of the reactor vertical axis.

**Properties of the catalytic reactor with periodical flow reversal:**

| | |
|---|---|
| Pressure drops | 50 mbar |
| Space velocity ("Gas Hourly Space Velocity", 4,000 $h^{-1}$ GHSV) | |
| Reversal time | 120 s |
| Diameter | 1.53 m |
| Catalyst mass for 1 stage | 375 kg |
| Number of stages | 2 |

(continued)

| | |
|---|---|
| Catalytic stage height | 0.34 m |
| Inert stage height | 0.34 m |
| Inlet gas velocity | 0.76 m/s |
| Kind of catalyst | EnviCat VOC-1544 (pellets of 4 ÷ 6 mm diameter), made by Sud Chemie |
| Catalyst apparent density | 1,520 kg/m$^3$ |
| Catalyst bulk density | 650 kg/m$^3$ |
| Catalyst porosity | 0.47 |
| Maximum operating temperature of the catalyst | 500 °C |
| Kind of inert material | Spheres of $Al_2O_3$ of 2 ÷ 4 mm diameter |
| Density of the inert material | 2,200 kg/m$^3$ |
| Numerical density of the inert material | 8,000,000 pieces/m$^3$ |
| Surface area of the inert material | 620 m$^2$/m$^3$ |
| Compression strength of the inert material | 1,250 N |
| Water absorption of the inert material | max. 6 % (m/m) |

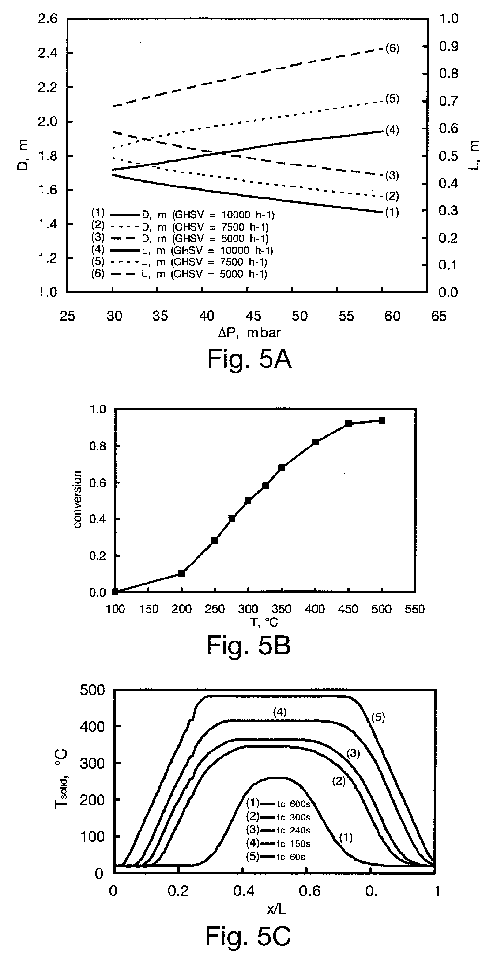

The graphs shown in Figures 5A, 5B and 5C respectively illustrate the trend of the pressure drops vs. reactor size and gas space velocity, the trend of the conversion vs. reactor temperature with catalyst EnviCat VOC - 1544 made by Sud Chemie and having a GHSV of 12,500 h$^{-1}$ and the temperature profiles inside the reactor vs. reactor axial coordinate and reversal time in the demonstration unit.

The graph of FIG. 5A allows to size the reactor in the more convenient way, based on the pressure drops deemed to be acceptable in the system.

Given a flowrate $Q_0$ to be treated and the parameter GHSV, it is immediately determined the necessary catalyst volume ($V_c$); as a matter of fact:

$$V_c = \frac{Q_0}{\text{GHSV}}$$

To the catalyst volume so calculated, it is necessary to add the volume of inert material supporting the catalyst that, that, at first instance, may be assumed to be equal to $V_c$; the diameter D and the length L of the reactor will be then determined based on the pressure drops deemed to be acceptable, as previously mentioned.

The size of the catalyst particles may affect the value of the pressure drops; the increase of the particle size allows to decrease the pressure drops the reactor diameter being equal. As previously mentioned, the graph of FIG. 5B illustrates the trend of the conversion vs. reactor temperature with catalyst EnviCat VOC - 1544 made by Sud Chemie and having a GHSV of 12,500 h$^{-1}$.

Said catalyst EnviCat VOC-1544 is based on non-noble metal oxides that are dispersed on alumina, so resulting fairly economical, and it is supplied under the form of pellets having a diameter comprised between 4 and 6 mm (such size of the catalyst particles produces low pressure drops); the maximum use temperature of such catalyst is of 500 °C.

The catalytic activity of the catalyst under regimen conditions is such as to perform the practically complete conversion of the fed VOC; furthermore, it has been observed that, at the temperature at which the reactor is made to operate, there is not formation of byproducts.

The graphs of FIG. 5C show the temperature profiles originated inside the reactor when the transit step is completed; the figure refers to the half of the time interval passing between a flow reversal and the subsequent one.

It becomes evident that in the central portion of the reactor a temperature *plateau* is created at a value higher than that necessary for the complete oxidation of the VOC present in the feeding; by increasing the switch time, such profile is modified (it is to be noticed that the abscissa is without dimension, being obtained by the ratio of the axial position to total length of the reactor).

By reducing the value of the switch time, the temperature of the central *plateau* increases, but the valves wear simultaneously increases; therefore, in order to increase the "service life" of the valves, a convenience exists in working with high values of the switch time. For the demonstration unit used in the present Example 1, the value of 600 s represents the maximum acceptable value of $t_c$, exceeded which emissions lower than the settled threshold of 20 mg/Nm$^3$ are no more assured.

If it is decided to operate with a value higher than GHSV, for instance of 5,000 h$^{-1}$, and consequently, with a lower catalyst amount, the surface velocity of the gas stream increases and the value of the maximum switch time at which it is possible to work decreases.

From the above description, which has been disclosed in detail, the advantages deriving from the use of the plant, and of the relevant process, for the treatment of gas streams according to the present invention become evident; in particular, the reduction of the investment cost (the applicant has evaluated a saving higher than 20 % compared with the technologies currently existing) and of the operating costs (estimated to be lower than 50 % compared with the technologies currently existing) as well as the easy operability and the possibility of several applications such as, for instance the treatment of emissions containing VOC from the process, chemical and pharmaceutical industries, painting and spread-coating in the automobile industry, VOC air stripping sections from waste waters, spread-coating and printing in the packing industry, the adhesive tapes industry, the purification units of process gas from VOC, the emissions coming from the blanketing systems of tank farms and/or hydrocarbon/solvent storage tank/drum/vessels, the solvent-based manufacturing of the food industry, the industrial washing and degreasing units, the spray and decoration booths, the film and paper printing, the tanning industry, the dyeing industry and the finishing of fibres and fabrics.

It is evident that the plant, and the relevant process, for the treatment of gas streams according to the present invention, herein disclosed through preferred embodiments, given by way of non limiting example, may be modified in accordance with ways known to the person skilled in the art without departing, for this, from the scope of the present invention.

**Claims**

1. A plant (1) for the treatment of gas streams containing contaminants, specifically Volatile Organic Compounds (VOC), whose content is very low and/or time-variable, said plant (1) comprising:

   - a catalytic reactor with periodical flow reversal (10); and
   - a heater (30) able to supply heat to the reactor (10), and a mixer (50) able to increase the amount of combustion supporter contained in the gas stream to be treated, and a time electronic controller (70) able to modify the reversal time of the reactor (10),

   **characterised in that** it further comprises means (90) for driving and controlling said heater (30) and said mixer (50) and said time electronic controller (70), depending on the catalyst operating conditions, said means (90) thus allowing the performance of a forced non-steady state catalytic combustion of the gas stream to be treated when said catalyst operating conditions are insufficient for the self-supporting of said reactor (10), i.e. when a heat supplement is needed and/or when the gas stream lacks in oxygen or is oxygen-free and/or when the reactor (10) tends to go to "shut-down".

2. A plant according to claim 1, **characterised in that** said catalytic reactor with periodical flow reversal (10) comprises at least two stages (11a, 11b), each stage (11a, 11b) consisting of a catalytic bed (13a, 13b) and of a corresponding layer of inert material (15a, 15b), said at least two stages (11a, 11b) being arranged in series.

3. A plant according to claim 2, **characterised in that** said heater (30) is interposed between said two stages (11a, 11b).

4. A plant according to any of the preceding claims, **characterised in that** said means (90) for driving and controlling said plant (1) comprise a control panel (91) and a motor control center (93).

5. A plant according to any of the preceding claims, further comprising a blower (20) for compressing and feeding the gas stream to be treated to said reactor (10).

6. A plant according to claim 5, further comprising a filter (40), located downstream said blower (20), for filtering the gas stream to be treated fed to said reactor (10).

7. A plant according to claim 6, further comprising a pre-heater (60), located downstream said blower (20) and said filter (40), for heating the gas stream to be treated fed to said reactor (10).

8. A plant according to claim 1, further comprising at least a feeding line (3) fo the reactor (10) for feeding the gas stream to be treated and at least a discharge line (5) from the reactor (10) for discharging the treated gas stream.

9. A plant according to claim 1, **characterised in that** said reactor (10) is vertically arranged.

10. A plant according to claim 1, **characterised in that** said catalyst forming each catalytic bed (13a, 13b) contains Cu and Mn oxides.

11. A process for the treatment of gas streams containing contaminants, specifically Volatile Organic Compounds (VOC), whose content is very low and/or time-variable, said process comprising the steps of:

   - feeding a gas stream to be treated into a catalytic reactor with periodical flow reversal (10), said feeding occurring through a feeding line (3);
   - performing a flow reversal into the reactor (10) between a first treatment direction and a second treatment direction reversed with respect to said first treatment direction;
   - controlling said reactor (10) to perform a forced non-steady state catalytic combustion of the gas stream to be treated, said control, depending on the catalyst operating conditions, being carried out by actuating means for driving and controlling (90) that operate a heater (30) able to supply heat to the reactor (10), and a mixer (50) able to increase the amount of combustion supporter contained in the gas stream to be treated, and a time electronic controller (70) able to modify the reversal time of the reactor (10) between said first treatment direction and said second treatment direction reversed with respect to said first treatment direction; and
   - discharging the treated gas stream through a discharge line (5),

   **characterised in that** said forced non-steady state catalytic combustion of the gas stream to be treated occurs when said catalyst operating conditions are insufficient for the self-supporting of said reactor (10), i.e. when a heat supplement is needed and/or when the gas stream lacks in oxygen or is oxygen-free and/or when the reactor (10) tends to go to "shut-down".

12. A process according to claim 11, further comprising a step of compressing and feeding the gas stream to be treated to said reactor (10) and a step of filtering, downstream the step of compressing, the gas stream to be treated fed to said reactor (10) and a step of pre-heating, downstream said steps of compressing and filtering, the gas stream to be treated fed to said reactor (10).

13. A process according to claim 11, **characterised in that** said gas stream to be treated consists of recirculation gas streams being part of process plants, wherein the VOC content has to be reduced before recirculating.

14. A process according to any of the claims 11 to 13, **characterised in that** the treatment of said gas stream is carried out with flow reversal times between said first and second treatment directions comprised in the range of about 20 - 1,500 seconds, preferably comprised in the range of about 60 - 600 seconds.

**Patentansprüche**

1. Anlage (1) zur Behandlung von Gasströmen, die Kontaminanten enthalten, insbesondere flüchtige organische Verbindungen (FOV), deren Gehalt sehr niedrig und/oder zeitveränderlich ist, wobei die Anlage (1) Folgendes umfasst:

   - einen katalytischen Reaktor mit periodischer Strömungsumkehr (10) und
   - eine Heizvorrichtung (30), die dem Reaktor (10) Wärme zuführen kann, und einen Mischer (50), der die Menge an Verbrennungshilfsstoff, der in dem zu behandelnden Gasstrom enthalten ist, erhöhen kann, und eine elektronische Zeitsteuerung (70), die die Umkehrzeit des Reaktors (10) ändern kann,

   **dadurch gekennzeichnet, dass** sie weiterhin Mittel (90) zum Betreiben und Steuern der Heizvorrichtung (30) und des Mischers (50) und der elektronischen Zeitsteuerung (70) je nach den Katalysatoreinsatzbedingungen umfasst, wobei die Mittel (90) somit die Durchführung einer instationären katalytischen Zwangsverbrennung des zu behandelnden Gasstroms ermöglichen, wenn die Katalysatoreinsatzbedingungen für die Selbstversorgung des Reaktors (10) unzureichend sind, d. h. wenn eine Wärmeergänzung erforderlich ist und/oder wenn es dem Gasstrom an Sauerstoff fehlt oder der Gasstrom frei von Sauerstoff ist und/oder wenn der Reaktor (10) dazu neigt, sich "abzuschalten".

2. Anlage nach Anspruch 1, **dadurch gekennzeichnet, dass** der katalytische Reaktor mit periodischer Strömungsumkehr (10) mindestens zwei Stufen (11a, 11b) umfasst, wobei jede Stufe (11a, 11b) aus einem katalytischen Bett (13a, 13b) und einer entsprechenden Schicht aus inertem Material (15a, 15b) besteht, wobei die mindestens zwei Stufen (11a, 11b) in Reihe angeordnet sind.

3. Anlage nach Anspruch 2, **dadurch gekennzeichnet, dass** die Heizvorrichtung (30) zwischen zwei Stufen (11a, 11b) eingeschoben ist.

4. Anlage nach einem der vorhergehenden Ansprüche, **dadurch gekennzeichnet, dass** die Mittel (90) zum Betreiben und Steuern der Anlage (1) eine Bedienkonsole (91) und einen Motorschaltschrank (93) umfassen.

5. Anlage nach einem der vorhergehenden Ansprüche, die weiterhin ein Gebläse (20) zum Verdichten und Einspeisen des zu behandelnden Gasstroms in den Reaktor (10) umfasst.

6. Anlage nach Anspruch 5, die weiterhin einen Filter (40), der dem Gebläse (20) nachgelagert ist, zum Filtern des zu behandelnden Gasstroms, der in den Reaktor (10) eingespeist wird, umfasst.

7. Anlage nach Anspruch 6, die weiterhin einen Vorheizer (60), der dem Gebläse (20) und dem Filter (40) nachgelagert ist, zum Erhitzen des zu behandelnden Gasstroms, der in den Reaktor (10) eingespeist wird, umfasst.

8. Anlage nach Anspruch 1, die weiterhin mindestens eine Speiseleitung (3) zu dem Reaktor (10) zum Einspeisen des zu behandelnden Gasstroms und mindestens eine Abblasleitung (5) von dem Reaktor (10) zum Abblasen des behandelten Gasstroms umfasst.

9. Anlage nach Anspruch 1, **dadurch gekennzeichnet, dass** der Reaktor (10) senkrecht angeordnet ist.

10. Anlage nach Anspruch 1, **dadurch gekennzeichnet, dass** der Katalysator, der jedes katalytische Bett (13a, 13b) bildet, Cu- und Mn-Oxide enthält.

11. Verfahren zur Behandlung von Gasströmen, die Kontaminanten enthalten, insbesondere flüchtige organische Verbindungen (FOV), deren Gehalt sehr niedrig und/oder zeitveränderlich ist, wobei das Verfahren die folgenden Schritte umfasst:

- Einspeisen eines zu behandelnden Gasstroms in einen katalytischen Reaktor mit periodischer Strömungsumkehr (10), wobei das Einspeisen durch eine Speiseleitung (3) erfolgt;
- Durchführen einer Strömungsumkehr in den Reaktor (10) zwischen einer ersten Behandlungsrichtung und einer zweiten Behandlungsrichtung, die in Bezug auf die erste Behandlungsrichtung umgekehrt ist;
- Steuern des Reaktors (10) dahingehend, eine instationäre katalytische Zwangsverbrennung des zu behandelnden Gasstroms durchzuführen, wobei die Steuerung je nach den Katalysatoreinsatzbedingungen durch Betätigungsmittel zum Betreiben und Steuern (90) durchgeführt wird, die eine Heizvorrichtung (30), die dem Reaktor (10) Wärme zuführen kann, und einen Mischer (50), der die Menge an Verbrennungshilfsstoff, der in dem zu behandelnden Gasstrom enthalten ist, erhöhen kann, und eine elektronische Zeitsteuerung (70), die die Umkehrzeit des Reaktors (10) zwischen der ersten Behandlungsrichtung und der zweiten Behandlungsrichtung, die in Bezug auf die erste Behandlungsrichtung umgekehrt ist, ändern kann, betreiben; und
- Abblasen des behandelten Gasstroms durch eine Abblasleitung (5),

**dadurch gekennzeichnet, dass** die instationäre katalytische Zwangsverbrennung des zu behandelnden Gasstroms erfolgt, wenn die Katalysatoreinsatzbedingungen für die Selbstversorgung des Reaktors (10) unzureichend sind, d. h. wenn eine Wärmeergänzung erforderlich ist und/oder wenn es dem Gasstrom an Sauerstoff fehlt oder der Gasstrom frei von Sauerstoff ist und/oder wenn der Reaktor (10) dazu neigt, sich "abzuschalten".

12. Verfahren nach Anspruch 11, das weiterhin einen Schritt des Verdichtens und Einspeisens des zu behandelnden Gasstroms in den Reaktor (10) und einen Schritt des Filterns, dem Schritt des Verdichtens nachgelagert, des zu behandelnden Gasstroms, der in den Reaktor (10) eingespeist wird, und einen Schritt des Vorerhitzens, den Schritten des Verdichtens und des Filterns nachgelagert, des zu behandelnden Gasstroms, der in den Reaktor (10) eingespeist wird, umfasst.

13. Verfahren nach Anspruch 11, **dadurch gekennzeichnet, dass** der zu behandelnde Gasstrom aus Rückführgasströmen besteht, die Teil von Prozessanlagen sind, wobei der FOV-Gehalt vor dem Rückführen gesenkt werden muss.

**14.** Verfahren nach einem der Ansprüche 11 bis 13, **dadurch gekennzeichnet, dass** die Behandlung des Gasstroms mit Strömungsumkehrzeiten zwischen der ersten und der zweiten Behandlungsrichtung durchgeführt wird, die in dem Bereich von etwa 20 - 1500 Sekunden, vorzugsweise in dem Bereich von etwa 60 - 600 Sekunden liegen.

**Revendications**

**1.** Installation (1) pour le traitement de courants gazeux contenant des contaminants, spécifiquement des composés organiques volatils (COV), dont la teneur est très faible et/ou variable au cours du temps, ladite installation (1) comprenant :

- un réacteur catalytique ayant une inversion d'écoulement périodique (10) ; et
- un dispositif de chauffage (30) apte à apporter de la chaleur au réacteur (10), et un mélangeur (50) apte à augmenter la quantité d'auxiliaire de combustion contenu dans le courant gazeux à traiter et un contrôleur électronique de temps (70) apte à modifier le temps d'inversion du réacteur (10),

**caractérisée par le fait qu'**elle comprend en outre des moyens (90) pour piloter et contrôler ledit dispositif de chauffage (30) et ledit mélangeur (50) et ledit contrôleur électronique de temps (70), en fonction des conditions opératoires de catalyseur, lesdits moyens (90) permettant ainsi la réalisation d'une combustion catalytique, non à l'équilibre, forcée du courant gazeux à traiter lorsque lesdites conditions opératoires de catalyseur sont insuffisantes pour l'autonomie dudit réacteur (10), à savoir lorsqu'un supplément de chaleur est requis et/ou lorsque le courant gazeux manque d'oxygène ou est exempt d'oxygène et/ou lorsque le réacteur (10) tend à passer « à l'arrêt ».

**2.** Installation selon la revendication 1, **caractérisée par le fait que** ledit réacteur catalytique ayant une inversion d'écoulement périodique (10) comprend au moins deux étages (11a, 11b), chaque étage (11a, 11b) consistant en un lit catalytique (13a, 13b) et en une couche correspondante de matière inerte (15a, 15b), lesdits au moins deux étages (11a, 11b) étant disposés en série.

**3.** Installation selon la revendication 2, **caractérisée par le fait que** ledit dispositif de chauffage (30) est interposé entre lesdits deux étages (11a, 11b).

**4.** Installation selon l'une quelconque des revendications précédentes, **caractérisée par le fait que** lesdits moyens (90) pour piloter et contrôler ladite installation (1) comprennent un panneau de commande (91) et un centre de commande des moteurs (93).

**5.** Installation selon l'une quelconque des revendications précédentes, comprenant en outre une soufflante (20) pour comprimer et introduire le courant gazeux à traiter dans ledit réacteur (10).

**6.** Installation selon la revendication 5, comprenant en outre un filtre (40), situé en aval de ladite soufflante (20), pour filtrer le courant gazeux à traiter introduit dans ledit réacteur (10).

**7.** Installation selon la revendication 6, comprenant en outre un dispositif de pré-chauffage (60), située en aval de ladite soufflante (20) et dudit filtre (40), pour chauffer le courant gazeux à traiter introduit dans ledit réacteur (10).

**8.** Installation selon la revendication 1, comprenant en outre au moins une conduite d'alimentation (3) allant au réacteur (10) pour introduire le courant gazeux à traiter et au moins une conduite de décharge (5) à partir du réacteur (10) pour décharger le courant gazeux traité.

**9.** Installation selon la revendication 1, **caractérisée par le fait que** ledit réacteur (10) est disposé verticalement.

**10.** Installation selon la revendication 1, **caractérisée par le fait que** ledit catalyseur formant chaque lit catalytique (13a, 13b) contient des oxydes de Cu et de Mn.

**11.** Procédé de traitement de courants gazeux contenant des contaminants, spécifiquement des composés organiques volatils (COV), dont la teneur est très faible et/ou variable au cours du temps, ledit procédé comprenant les étapes de :

- introduction d'un courant gazeux à traiter dans un réacteur catalytique ayant une inversion d'écoulement périodique (10), ladite introduction ayant lieu par une conduite d'alimentation (3) ;

- réalisation d'une inversion d'écoulement dans le réacteur (10) entre une première direction de traitement et une seconde direction de traitement inversée par rapport à ladite première direction de traitement ;
- commande dudit réacteur (10) pour réaliser une combustion catalytique, non à l'équilibre, forcée, du courant gazeux à traiter, ladite commande, en fonction des conditions opératoires de catalyseur, étant effectuée par actionnement de moyens (90) de pilotage et de commande qui actionnent un dispositif de chauffage (30) apte à apporter de la chaleur au réacteur (10), et un mélangeur (50) apte à augmenter la quantité d'auxiliaire de combustion contenu dans le courant gazeux à traiter, et un contrôleur électronique de temps (70) apte à modifier le temps d'inversion du réacteur (10) entre ladite première direction de traitement et ladite seconde direction de traitement inversée par rapport à ladite première direction de traitement ; et
- décharge du courant gazeux traité à travers une conduite de décharge (5),

**caractérisée par le fait que** ladite combustion catalytique, non à l'équilibre, forcée, du courant gazeux à traiter a lieu lorsque lesdites conditions opératoires de catalyseur sont insuffisantes pour l'autonomie dudit réacteur (10), à savoir lorsqu'un supplément de chaleur est requis et/ou lorsque le courant gazeux manque d'oxygène ou est exempt d'oxygène et/ou lorsque le réacteur (10) tend à passer « à l'arrêt ».

12. Procédé selon la revendication 11, comprenant en outre une étape de compression et d'introduction du courant gazeux à traiter dans ledit réacteur (10) et une étape de filtration, en aval de l'étape de compression, du courant gazeux à traiter introduit dans ledit réacteur (10) et une étape de préchauffage, en aval desdites étapes de compression et de filtration, du courant gazeux à traiter introduit dans ledit réacteur (10).

13. Procédé selon la revendication 11, **caractérisé par le fait que** ledit courant gazeux à traiter consiste en des courants gazeux de recyclage faisant partie d'installations de traitement, la teneur en COV devant être réduite avant le recyclage.

14. Procédé selon l'une quelconque des revendications 11 à 13, **caractérisé par le fait que** le traitement dudit courant gazeux est effectué avec des temps d'inversion d'écoulement entre lesdites première et seconde directions de traitement comprises dans la plage d'environ 20-1 500 secondes, de préférence comprises dans la plage d'environ 60-600 secondes.

Fig. 1

Fig. 2

Fig. 3

| Device 20 | Switch time | T | Automatic safety action | Criticalities |
|---|---|---|---|---|
| | | T7 | Emergency path of the gas stream; inlet of the combustion supporter not allowed | Catalyst damaged |
| Q = 0 | Modulation of $t_c$ automatic of $\Delta t_c$ | | | |
| | | T6 | ↑ 20 is switched on ↓ 20 is switched off | |
| | | T5 | | |
| Q = Qs | $t_c$ = $t_c$ set point | T4 (T set point) | | |
| | | T3 | | |
| Q = Q1 | | | ↑ 20 is switched off | |
| | | T2 | ↓ 20 is switched on | |
| Q = Qmax | $t_c$ = 60 s | | | Possible emissions above-limit |
| | | T1 | | Reactor switches off |

Fig. 4

Fig. 5A

Fig. 5B

Fig. 5C

**REFERENCES CITED IN THE DESCRIPTION**

**Patent documents cited in the description**

- US 5366708 A
- US 5823770 A
- US 5873388 A
- EP 1136755 A1
- US 5874053 A

**Non-patent literature cited in the description**

- **YU. SH. MATROS.** Unsteady State Processes in Catalysis. Brill Academic Publishers, December 1990
- Fixed bed reactors. **EIGENBERGER, G.** Ullmann's Encyclopedia of Chemical Industry. VCH, 1992, 199-238